# EUROPEAN PATENT SPECIFICATION

(11) **EP 3 917 331 B1**
(45) Date of publication and mention of the grant of the patent: **06.08.2025**
(21) Application number: 20749481.6
(22) Date of filing: 27.01.2020
(51) Int. Cl.: A23K 50/80, A23K 20/147, A23K 20/158, A23K 20/163, A23K 20/174, A23K 40/25

(54) **FEED FOR AQUATIC SPECIES WITH A STABLE SOFT AND ELASTIC TEXTURE**
FUTTER FÜR WASSERSPEZIES MIT STABILER WEICHER UND ELASTISCHER TEXTUR
ALIMENT POUR ESPÈCES AQUATIQUES AVEC TEXTURE MOLLE ET ÉLASTIQUE STABLE

(30) Priority: 28.01.2019 NO 20190102
(43) Date of publication of application: 08.12.2021
(73) Proprietor: Nutreco IP Assets B.V., 5831 JN Boxmeer (NL)
(72) Inventor: DRAGANOVIC, Vukasin, 4019 Stavanger (NO); JONKERS, Jan, 4310 Hommersåk (NO); ROSENLUND, Grethe, 4011 Stavanger (NO); FONTANILLAS, Ramon, 08006 Barcelona (ES); URREA DE MUZDEKA, Diana Rocio, 4027 Stavanger (NO)
(74) Representative: Håmsø Patentbyrå AS
(86) International application number: PCT/NO2020/050014
(87) International publication number: WO 2020/159376

(56) References cited:
- EP-A1- 2 412 248
- EP-A1- 2 880 989
- EP-A1- 3 235 385
- WO-A1-02/071867
- WO-A1-2004/017751
- WO-A1-2006/098629
- WO-A1-2018/128555
- WO-A2-2006/130015
- AU-A1- 2016 305 897
- JP-A- 2005 027 613
- JP-A- 2005 176 624
- JP-A- 2008 086 274
- KR-A- 20000 024 431
- KR-A- 20110 005 629

## Description

### INTRODUCTION

The invention relates to a feed that has a soft and elastic texture. The invention relates to a feed for aquatic species. The feed with the stable soft and elastic texture may be a fish feed, a shrimp feed or an octopus feed. In particular the invention relates to a fish feed, and even more particular the invention relates to a fish feed for tuna (*Thunnus* spp.). The feed remains soft and elastic after storage. The tuna may be captured tuna which is fed to market size or farmed tuna which are raised in closed tanks / nets from hatching to harvest. Tunas, and in particular Pacific bluefin tuna (*T*. *orientalis*) and Southern bluefin tuna (*T. maccoyii*), are popular on the Japanese market and are well paid catch.

### Background and problem description

Modern, commercially available feeds for aquaculture purposes are produced by so called cooking extrusion. Most of the ingredients are mixed in a dry blend prior to the cooking extrusion process. Some ingredients, in particular liquid ingredients, may be added in the pre-conditioner step prior to the extrusion step or may be added to the barrel of the extruder. Too much fat in the initial blend or added as liquid, is detrimental to the extrusion process due to its lubricating effect. Fat, i.e. edible oils, are added in separate oil coating step after the extrusion process. The oil coating step may be carried out in a vessel at a sub-atmospheric pressure.

The extrudate will just after leaving the extruder, be soft and elastic in texture. After drying, coating, cooling and bagging, the feed particles become harder and reach a final hardness during storage. After storage and transport to the fish farm, such feed is relative hard and brittle. It is important that the feed particles maintain integrity. Feed particles that fall apart create "broken" feed and dust. Small feed particles are not eaten by fish and are a loss.

It has been found that some wild caught fish held in captivity for growing, will accept the extruded hard feed after a weaning period. However, some species of wild caught fish, e.g. tuna fish, seems not to accept extruded feed. Such fish are fed with "prey" fish e.g. herring, sardines, mackerel and the like, or with soft feeds, e.g. freshly made up feed particles from grinded fish. Such feeding is laborious, involve a more complicated logistic feed chain and the utilization (feed conversion ratio) is not optimal.

It has also been found that tuna fish raised from eggs in hatcheries and further in tanks and nets do not accept extruded hard feed but have a preference for soft feeds.

Thus, there is a need for a feed, in particular a fish feed, that is produced by extrusion cooking and that is softer and more elastic than known extruded feed. It is important that the feed particles maintain their softness and elasticity during storage.

Another constraint of the needed feed is that the feed composition must be "complete", i.e., it must meet all nutritional demands regarding protein / amino acids, energy, fatty acids, minerals and vitamins, since aquatic species are only offered one type of feed over a continued period.

EP2412248 describes a soft elastic feed suitable for tuna consisting of an inner layer and an outer layer that differ in composition. The inner layer contains mainly fish meal and is covered by a starch-based heat-induced gel, called the outer layer. Such two-layered feeds are difficult to make.

WO2018/128555 describes a bait feed for fishing. Extruded dry pellets are mixed with a solution of water and glycerol in the amount of 0.5 l/kg for moistening the pellets. The final bait feed has a soft structure where individual pellets can be compressed and glued together and used as a bait when fishing with a fishing rod.

The invention has for its object to remedy or to reduce at least one of the drawbacks of the prior art, or at least provide a useful alternative to prior art.

The object is achieved through features, which are specified in the description below and in the claims that follow.

### General description of the invention

The invention regards a cooking extruded, formulated feed for aquatic species that is complete with regard to nutritional demands of the intended aquatic species. Some feeds for aquatic species are complete after the cooking extrusion. Some feeds for aquatic species require a higher fat level than is possible to obtain by cooking extrusion and fat is added in a separate coating step after the extrusion step. Such feeds are complete after the fat coating step. The complete feed is soft and elastic after storage.

The inventor has found that the combination of a starch containing, tuberous-originating thickening agent, a hydrolysed plant protein source and a plasticizer is important to achieve the aimed characteristics. Comparative studies where either the hydrolysed plant protein source or the plasticizer component has been left out, have shown that the feed pellets are not soft and elastic enough and cracks form easily within the pellets upon a small compression pressure. This will result in formation of «broken» pellets and dust during storage and transport of the feed.

These components are disclosed in further details in the dependent claims.

The invention is defined by the independent patent claims. The dependent claims define advantageous embodiments of the invention.

### Feed

In a first aspect the invention relates more particularly to an extruded, formulated, complete feed for aquatic species, in particular an extruded, formulated, complete fish feed, said formulated, complete feed comprising:
- at least one non-hydrolysed protein source;
- at least one fat source;
- fibers;
- a vitamin additive;
- a mineral additive;
- water;
- a binder comprising at least partly an edible, starch containing, tuberous-originating thickening agent;
- a hydrolysed plant protein source; and
- a plasticizer,
and said formulated, complete feed comprises a moisture content from about 12.5% to about 25% (w/w) of the complete feed.

In a suitable embodiment, the feed for aquatic species taught herein is fish feed.

As used herein, the weight percentages of feed components taught herein may be relative to the weight of the complete feed as taught herein.

The extruded, formulated, complete feed taught herein may comprise at least one carbohydrate containing source.

The fibres in the feed may be inherent in the raw materials and may be derived from the non-hydrolysed protein source, fat source, carbohydrate containing source, binder or hydrolysed plant protein source or added as separate fibres in addition to the listed raw materials.

Said feed may comprise from about 5% to about 9% (w/w) of an edible, starch-containing, tuberous-originating thickening agent of the complete feed. Said feed may comprise about 6% to about 8% (w/w), alternatively about 7% (w/w), alternatively about 8% (w/w) of said edible, starch-containing, tuberous-originating thickening agent of the complete feed. The edible, starch-containing, tuberous-originating thickening agent may comprise, or consist essentially of, pregelatinized potato starch, native potato starch or tapioca starch or any combination thereof.

Said hydrolysed plant protein may be a hydrolysed plant protein with a degree of hydrolysis from about 3% to about 25%. Said feed may comprise from about 5% to about 15% (w/w) hydrolysed plant protein of the complete feed. Said feed may comprise from about 6% to about 15% (w/w) hydrolysed plant protein of the complete feed. Said feed may comprise from about 7% to about 12.5% (w/w) hydrolysed plant protein of the complete feed. Said feed may comprise from about 5% to about 10% (w/w) hydrolysed plant protein of the complete feed. The hydrolysed plant protein may comprise hydrolysed wheat gluten.

Said feed may comprise from about 1.5% to about 5% (w/w) plasticizer of the complete feed. Said feed may comprise from about 1.5% to about 4% (w/w) plasticizer of the complete feed. Said feed may comprise from about 1.5% to about 3.5% (w/w) plasticizer of the complete feed. Said feed may comprise from about 2% to about 5% (w/w) plasticizer of the complete feed. Said feed may comprise from about 2% to about 4% (w/w) plasticizer of the complete feed. Said feed may comprise from about 2% to about 3.5% (w/w) plasticizer of the complete feed. Said plasticizer may comprise glycerol, sorbitol, inverted sugar, dextrose powder or fish gelatine or any combination thereof.

Said feed may comprise a moisture content from about 14% to about 20% (w/w), and even more preferably from about 15 % (w/w) to about 17% (w/w) of the complete feed.

Said feed may comprise a crude protein content from about 30 to about 65% (w/w), such as from about 35 to about 60% (w/w), or from about 40% to about 60% (w/w) of the complete feed. The skilled person knows which non-hydrolysed protein sources may be used to prepare the feed taught herein. Non-limiting examples include, without limitation, wheat proteins such as wheat gluten, soy proteins, and the like.

Said feed may comprise a crude fat content from about 5 to about 40% (w/w), such as from about 10 to about 37% (w/w), or from about 15% to about 35% (w/w) of the complete feed. The weight ratio of crude fat : crude protein may be from about 15 : 60 to about 35 : 40. The skilled person knows which at least one fat sources are suitable for use herein. They include, without limitation, fish oil, fish meal, krill meal, squid meal, algae oil, algae meal, vegetable oil, and any combination thereof.

Said feed may have a hardness, i.e. strength at rupture, of less than 1000 g mm⁻¹ as measured by diametral compression using a texture-analyser fitted with a 50 kg load cell and a 5 mm diameter spherical stainless-steel cylinder, attain a trigger of 10 g, proceed to compress a horizontally placed feed pellet at a pre-test speed of 2 mm s⁻¹ and at a constant test speed of 2 mm s⁻¹ to achieve 35 g of force, set a post-test speed to 10 mm s⁻¹ and a break sensitivity to 10 g and record a strength-time graph by a computer. Said feed may have a hardness of less than 900 g mm⁻¹. Said feed may have a hardness of less than 800 g mm⁻¹. Said feed may have a hardness of less than 700 g mm⁻¹. Said feed may have a hardness of less than 600 g mm⁻¹. Said feed may have a hardness of less than 550 g mm⁻¹. Said feed may have a hardness less than 1100 g mm⁻¹ directly after production. Said feed may have a hardness less than 1000 g mm⁻¹ directly after production. Hardness may be defined by diametral compression of said feed using a suitable texture-analyser fitted with a load cell and a 5 mm diameter spherical cylinder as probe. Once the trigger of 10 g is attained, the probe may proceed to compress the sample at a pre-test speed of 2 mm s⁻¹ and a constant test speed of 2 mm s⁻¹ to achieve 35 g of force. Post-test speed may be set to 10 mm s⁻¹ while break sensitivity may be set to 10 g. Alternatively, hardness may be defined by diametral compression of said feed using a suitable texture-analyser fitted with a load cell and a 25 mm diameter spherical cylinder as probe. Once the trigger of 5 g is attained, the probe may proceed to compress the sample at a pre-test speed of 2 mm s⁻¹ and a constant test speed of 2 mm s⁻¹ to achieve 40% compression, set a post-test speed to 10 mm s⁻¹, record a force-strain graph by a computer and calculate Gradient = Force (g) / Strain (%) at a first peak of the force.

Said feed may have a hardness of less than 1000 g mm⁻¹ after one months of storage at a temperature of 25°C and at 75% RH (relative humidity), such as a hardness of less than 900 g mm⁻¹, such as a hardness of less than 300 g mm⁻¹. Said feed may have a hardness of less than 1000 g mm⁻¹ after three months of storage at 25°C and at 75% RH, such as a hardness of less than 900 g mm⁻¹, such as a hardness of less than 850 g mm⁻¹. Said feed may have a hardness of less than 1000 g mm⁻¹ after six months of storage at 25°C and at 75% RH, such as a hardness of less than 950 g mm⁻¹, such as a hardness of less than 900 g mm⁻¹.

The feed may be homogeneous, or substantially homogeneous. In a suitable embodiment, substantially all raw materials making up the feed and providing the composition taught herein have been mixed together and undergone processing together. In an embodiment, substantially all raw materials making up the feed and providing the composition taught herein with the exception of the fat source have been mixed together and undergone processing together, after which the fat source may have been incorporated into the feed through vacuum coating, providing a substantially homogeneous feed.

In an embodiment, the feed taught herein is devoid of, or substantially devoid of, distinctive layers.

The feed taught herein may be obtainable by a method as taught herein.

### Method for production of feed according to the invention

In a second aspect, the invention provides a method of producing the feed taught herein, comprising the steps of:
i) providing the:
   - at least one non-hydrolysed protein source;
   - at least one fat source;
   - fibers;
   - a vitamin additive;
   - a mineral additive;
   - water;
   - a binder comprising at least partly an edible, starch containing, tuberous-originating thickening agent;
   - a hydrolysed plant protein source; and
   - a plasticizer,
ii) mixing at least the at least one non-hydrolysed protein source, fibers, vitamin additive, mineral additive, binder comprising at least partly an edible, starch containing, tuberous-originating thickening agent, hydrolysed plant protein source, and optionally, the at least one fat source, plasticizer, and water;
iii) optionally, feeding the mixture of step ii) into a pre-conditioner;
iv) optionally, adding the plasticizer and/or the at least one fat source to the pre-conditioner;
v) optionally, adding steam and/or water to the pre-conditioner;
vi) feeding the, optionally preconditioned, mixture to a cooking extruder;
vii) optionally, adding the plasticizer and/or the at least one fat source to the cooking extruder;
viii) optionally, adding water and/or steam to the mixture of step vii);
ix) making an extrudate, and optionally cutting the extrudate into feed pellets; and
x) optionally, adding the at least one fat source to the extrudate and/or feed pellets by sub-atmospheric coating.

In the method taught herein, all ingredients provided in step i) may be mixed together in step ii). Alternatively, water may be added in the form of steam or water during preconditioning (steps iii)-v)) and/or cooking extruding (steps vi)-ix)). In case of a liquid plasticizer (e.g., glycerol), said plasticizer may be added either upon mixing (step ii)), or may be added during preconditioning or cooking extruding. It will be obvious to the skilled person that the plasticizer may also be added in two or three parts during two or more of mixing, preconditioning and/or cooking extruding. The at least one fat source used in feed for aquatic species is usually liquid. Similar to the plasticizer, the at least one fat source may be added either upon mixing (step ii)), or may be added during preconditioning or cooking extruding. It will be obvious to the skilled person that the at least one fat source may also be added in two or three parts during two or more of mixing, preconditioning and/or cooking extruding.

Alternatively, feed and/or extrudate containing all ingredients except for the at least one fat source may be prepared by cooking extruding, after which the at least one fat source may be incorporated using coating under sub-atmospheric conditions (also referred to as 'vacuum coating'). As is well known to the skilled person, coating under sub-atmospheric conditions results in substantially homogeneous incorporation of the at least one fat source in the feed for aquatic species, thus providing a feed for an aquatic species. Said feed may have a homogeneous or substantially homogeneous composition.

The cooking extruder may be operated at relatively low temperature, such as between 60 and 140°C, e.g., between 70 and 130°C, or between 80 and 120°C, or between 90 and 110°C.

If a preconditioner is used, it may also be operated at relatively low temperature, such as between 60 and 140°C, e.g., between 70 and 130°C, or between 80 and 120°C, or between 90 and 110°C.

It will be clear to the skilled person that the amount of water and/or steam added may be sufficient to reach the moisture content from about 12.5% to about 25% (w/w) of the complete feed.

In an embodiment, the mixing step ii) is carried out until the mixture is homogeneous or substantially homogeneous.

The resultant feed pellet is a homogeneous or substantially homogeneous feed pellet.

In an embodiment the extrudate in step ix) is made with an oil absorbing capacity of at least 10% (w/w).

The cooking extruder may be provided with a die plate provided with through holes to make the extrudate with a diameter of minimum of 3 mm after expansion of the extrudate.

### Methods of use

The present disclosure teaches a method of feeding an aquatic species, said method comprising the step of administering, or feeding, to said aquatic species a feed as taught herein.

The present disclosure also teaches a method of improving body weight gain and/or average daily gain and/or specific growth rate of an aquatic species, said method comprising the step of administering, or feeding, to said aquatic species a feed as taught herein.

Also, the present disclosure teaches a method of improving FCR (Feed Conversion Ratio) in an aquatic species, said method comprising the step of administering, or feeding, to said aquatic species a feed as taught herein.

In an embodiment, the aquatic species may be selected from finfish and crustaceans.

In an embodiment, the aquatic species may be selected from the group consisting of tuna, groupers, salmonids, basses, tilapia, cleaner fish, cod fish, flat fish such as flounders, soles, turbot, plaice, and halibut, catfish, pike and pickerel, carps, breams such as sea bream, shrimp, prawns, crabs, lobsters, and crawfish. In a preferred embodiment, the aquatic species may be tuna.

The body weight gain and/or average daily gain and/or specific growth rate of an aquatic species may be considered improved relative to feeding the aquatic species forage fish, also known as 'prey fish' or 'bait fish', which are small pelagic fish which are preyed on by larger predators for food, and/or relative to feeding the aquatic species feed based on grinded forage fish, said feed is known as moist or semi-moist feed.

Similarly, the FCR in an aquatic species may be considered improved relative to feeding the aquatic species forage fish and/or feeding the aquatic species moist feed or semi-moist feed based on grinded forage fish.

### Definitions

The invention is described by terms that have the following meaning:
By "extrusion" or "cooking extrusion" is meant an extrusion process either by means of a single screw extruder or a double screw extruder. In addition to extruding at conditions above 100°C within the extruder barrel, extrusion or cooking extrusion is in the following further meant an extrusion process at hot conditions in the extruder barrel, either a single screw extruder barrel or a double screw extruder barrel. By hot conditions is meant that at least one zone of the extruder barrel is kept at 70°C or above 70°C. By an extruded feed is meant a feed produced by an extrusion process.

By a "formulated feed" is meant a feed composed of one or more protein sources such as, but not limited to, marine protein such as fishmeal and krill meal, vegetable protein such as soy meal, rape seed meal, wheat gluten, corn gluten, lupine meal, pea meal, sunflower seed meal and rice meal, and slaughterhouse waste such as blood meal, bone meal, feather meal and chicken meal. By mixing different protein sources, each having its own amino acid profile, it is possible within certain limits to achieve a desired amino acid profile in the feed adapted to the species of fish the feed is intended for.

A formulated feed further contains oils such as fish oil and/or vegetable oils such as rapeseed oil and soy oil as an energy source. A formulated feed also contains a binder, usually in the form of a raw material rich in starch, such as wheat or wheat flour, potato flour, rice, rice flour, pea flour, beans or tapioca flour to give the feed the desired strength and form stability.

A formulated feed further contains minerals and vitamins necessary to take care of good growth and good health for the aquatic species such as fish. The feed may further contain further additives such as pigments, to achieve certain effects.

A formulated feed is thus a composite feed where the relative amounts between proteins, fat, carbohydrates, vitamins, minerals and any other additives is calculated to be optimally adapted to the nutritional needs of the aquatic species such as fish based on the age or life stage of the aquatic species such as fish. It is common that feeding is done with only one type of feed and with that every piece of feed is nutritionally adequate.

By a dry, formulated feed is meant a feed of the extruded type.

In the following are described examples of preferred embodiments and analytical results are illustrated in the accompanying drawings, wherein:
- Fig. 1: shows a comparison of texture between a 9 mm diameter standard Atlantic salmon feed and an 8.5 mm soft and elastic feed according to the invention, x-axis: strain (%), y-axis: force (g);
- Fig. 2: shows in the same way as figure 1 a comparison of texture between a 17 mm diameter standard turbot feed and a 20 mm soft and elastic feed according to the invention;
- Fig. 3: shows a comparison of several standard fish feed (hard pellets) and soft and elastic feeds according to the invention as "gradient" (=force(g)/strain(%)) as a function of pellet size;
- Fig. 4: shows a comparison of texture between five different 8.5 mm diameter feeds according to the invention, stored for up to six months at 25°C and 75% RH;
- Fig. 5: shows results from a growth trial with young bluefin tuna (*T. orientalis*) comparing feeding with raw forage fish and a feed according to the invention;
- Fig. 6A-B: Panel A shows samples of a diet 1 feed (according to the invention); panel B shows a feed pellet after manually squeezing four or five times;
- Fig. 7A-B: Panel A shows samples of a diet 2 feed (without wheat gluten hydrolysate); panel B shows a feed pellet after manually squeezing four or five times; and
- Fig. 8A-B: Panel A shows samples of a diet 3 feed (without glycerol); panel B shows a feed pellet after manually squeezing four or five times.

### Feed texture analysing method #1

Strength at rupture (hardness) was measured by diametral compression using a Texture-Analyser (TA XT2, Model 1000 R; SMS Stable Micro Systems, Blackdown Rural Industries, Surrey, UK), fitted with a 50 kg load cell. Once the trigger of 10 g is attained, the probe proceeds to compress the sample. Analyses were performed using a 5 mm diameter spherical stainless-steel cylinder (P/5S, Stable Micro Systems) by pressing the cylinder onto the horizontally placed pellet at a pre-test speed of 2 mm s⁻¹ and a constant test speed of 2 mm s⁻¹ to achieve 35 g of force. The post-test speed was set to 10 mm s⁻¹ while break sensitivity was set to 10 g. The strength-time graphs were recorded by a computer and analysed using the Texture Exponent for Windows (version 6.1.7.0, Stable Micro Systems), and strength at rupture was recorded on ten pellets. Strength was reported as the average value of ten pellets.

### Feed texture analysing method #2

Strength at rupture (hardness) and elasticity were measured by diametral compression using the same Texture-Analyser as in Method #1, fitted with a 50 kg load cell. Once the trigger of 5g is attained, the probe proceeds to compress the sample. Analyses were performed using a 25 mm diameter spherical stainless-steel cylinder (P/25, Stable Micro Systems) by pressing the cylinder onto the horizontally placed pellet at pre-test speed of 2 mm s⁻¹ and a constant test speed of 2 mm s⁻¹ to achieve 40% compression. The post-test speed was set to 10 mm s-1. The force-strain (%) graphs were recorded by a computer, analysed and reported as "gradient", i.e. Gradient = Force (g) / Strain (%). Strength at rupture was reported as the average value of ten pellets.

### Examples

Standard formulated dry pellets of 9 and 22 mm in diameter presented in the examples were manufactured in the ordinary way by extrusion as is well known by those skilled in the art. Total moisture content was adjusted to about 7-8% by drying after extrusion. Soft and elastic fish feed pellets suitable for feeding tuna according to the invention were prepared separately as described below.

The formulated fish feeds presented in the examples meet the theoretical nutritional requirements for Atlantic Bluefin Tuna *(T. thynnus).* The formulations of the 8.5 mm, 25 mm and 35 mm in diameter tuna feeds are given in table 1A. Tuna feeds of 8.5 mm correspond to the standard formulated dry pellets of 9 mm, and tuna feed of 25 mm corresponds to the standard formulated dry pellets of 22 mm, as these are comparable feed sizes.

### Production of fish feed suitable for feeding tuna

A first 8.5 mm diameter fish feed according to the invention was produced as follows: The dry ingredients were pre-mixed in a vertical mixer and ground in a Dinnissen 30 kW hammer mill (Dinnissen, Sevenum, The Netherlands), with a screen size of 0.75 mm. The ingredients were then mixed in a Dinnissen horizontal ribbon mixer (500LTR) for 7 min. The feed mash was conditioned in a differential diameter conditioner (DDC 2; Wenger Manufacturing, Sabetha, KS, USA) and extruded in a Wenger X-85 single screw extruder with a screw diameter of 85 mm. The ingredients were extruded as described, yielding extrudates with a diameter of 8.5 mm and a length of approximately 9 mm. The knife rotation speed was adjusted according to the specified length of the extrudates.

The drying temperature was set to 25°C and the product was dried for just 5 min in a Wenger Series III horizontal 3-zones dryer. Typically, at these conditions, the product will lose only about 1% moisture of its nominal weight and therefore the whole process can be seen as a "no drying process". Subsequently, the pellets obtained were coated with oil in a Forberg 6-I vacuum coater (Forberg, Oslo, Norway). The total moisture addition to the extrusion process, i.e. added to the preconditioner and/or to the extruder barrel was calculated in such a way to give 15% total moisture content in the finished product, considering almost no loss of water during drying and accounting for the loss of moisture during extruder die "flash off" as well as coating. Actual moisture addition is shown in table 2.

A second 8.5 mm diameter fish feed according to the invention was produced as described above but extruded in a Wenger TX-57 twin screw extruder. The barrel of the extruder was 57 mm in diameter and the length-to-diameter ratio was 17.5:1. The extruder barrel consisted of four head sections, with each section jacketed to permit either steam heating (Sections 1-4) or water cooling (Sections 2-4). Temperature control of the second, third and fourth sections was achieved by balancing the heating and cooling power input. The ingredients were extruded as described, yielding extrudates with a diameter of approximately 8.5 mm and a length of approximately 9.5 mm. The knife rotation speed was adjusted according to the specified length of the extrudates.

The obtained fish feed was dried in a Wenger Series III horizontal 3-zones dryer to approximately 850 g kg⁻¹ dry matter.

Subsequently, the obtained first 8.5 mm fish feed and the second 8.5 mm fish feed were coated with fish oil in a Forberg 60-I vacuum coater.

A 25 mm diameter fish feed according to the invention was produced on a commercial extruder (Wenger, X-175 Single screw extruder). This fish feed has been prepared using the same procedure as described for the 8.5 mm diameter fish feed production. The process parameters can be found in table 2.

**Table 1A Formulations of fish feeds according to the invention**

| Ingredient (kg) | Examples / Pellet size (mm) | | | |
|---|---|---|---|---|
| | Ex. 1/ 8.5 | Ex. 2/ 25 | Ex. 4/ 35 | Ex. 5/ 35 |
| Water (added) | 0.07 | 7.88 | 8.44 | 8.44 |
| Glycerol | 3.36 | 2.20 | 2.20 | 2.20 |
| Potato starch | 7.02 | 8.00 | 7.00 | 7.00 |
| Wheat gluten hydrolysate | 7.07 | 7.5 | 14.50 | 14.50 |
| Vital wheat gluten | 3.46 | 5.50 | | |
| Krill meal | 1.00 | 3.00 | 3.00 | 3.00 |
| Fish meal | 56.51 | 47.99 | 36.05 | 36.05 |
| Fish protein hydrolysate | 5.01 | | 5.00 | 5.00 |
| Fish oil | 11.51 | 14.47 | 21.38 | 21.38 |
| Minerals & vitamin mix | 4.98 | 2.46 | 2.28 | 2.28 |
| Salt (NaCl) | | 1.00 | | |
| Calcium propionate | | | 0.15 | 0.15 |

**Table 1B Composition by NIR analysis of some fish feed according to the invention**

| Main constituents (%) | Examples / Pellet size (mm) | | |
|---|---|---|---|
| | Ex. 1/ 8.5 | Ex. 2/ 25 | Ex. 4/ 35 |
| Moisture | 15.6 | 13.9 | 13.3 |
| Protein | 49.3 | 41.8 | 40.5 |
| Fat | 18.4 | 21.5 | 23.8 |
| Ash | 8.1 | 8.8 | 8.7 |
| Other* | 8.6 | 14 | 13.7 |

| | | | |
|---|---|---|---|
| *Glycerol, carbohydrates, fibres | | | |

**Table 2 Extruder process parameters**

| Process parameter | Examples / Pellet size (mm) | | | | |
|---|---|---|---|---|---|
| | Ex. 1/ 8.5 | Ex. 3/ 8.5 | Ex. 2/ 25 | Ex. 4/ 35 | Ex. 5/ 35 |
| Capacity feed mix (kg h⁻¹) | 120 | 150 | 4319 | 200 | 2938 |
| Steam added to pre-conditioner (%) | 6.5 | 6 | 7.2 | 6 | 5.7 |
| Water added to pre-conditioner (%) | 10 | 13 | 8.8 | 9.5 | 6.6 |
| Temperature pre-conditioner (°C) | 85 | 74 | 89 | 71 | 90 |
| Steam added to extruder (%) | | | | | 4.1 |
| Water added to extruder (%) | 0 | 0 | 0 | 0 | 0 |
| Glycerol added to pre-conditioner (%) | 3.7 | 3.3 | 2.4 | 2,8 | 2,7 |
| Process oil (%) | 1 | 3.6 | 0.6 | 3 | 7.4 |
| Extruder barrel temp. (°C)* | ≈90 | ≈90 | ≈90 | ≈100 | ≈100 |
| Revolution of screws (rpm) | 361 | 578 | 371 | 321 | 353 |
| Die orifice diameter (mm) | 7 | 6.5 | 19.5 | 31 | 25.1 |
| Bulk density after extruder (g/l) | 540 | 540 | 459 | | 529 |

| | | | | | |
|---|---|---|---|---|---|
| *Material within the extruder barrel is at least 20 K warmer than the extruder barrel | | | | | |

**Table 3 Drying parameters**

| Drying parameter | Examples / Pellet size (mm) | | | | |
|---|---|---|---|---|---|
| | Ex. 1/ 8.5 | Ex. 3/ 8.5 | Ex. 2/ 25 | Ex. 4/ 35 | Ex. 5/ 35 |
| Temperature section 1 (°C) | 25 | 40 | | 40 | |
| Temperature section 2 (°C) | 25 | 38 | | 40 | |
| Temperature section 3 (°C) | 25 | 36 | | 40 | |
| Total drying time (min) | 5 | | | 13 | |
| Dryer batch time (s) | | 40 | 40 | | 40 |
| Dryer fans 1-3 | | | Off | | Off |
| Dryer heaters 1-3 | | | Off | | Off |

### Texture analysis

The accepted threshold to consider an extruded product soft is 1000 g/mm force using the Feed texture analysing method #1 in combination with a shape of the curve from the Feed texture analysing method #2 as shown in figures 1 and 2. The product is soft if the force is below 1000 g/mm.

In some cases, a standard feed particle can be below the threshold value of 1000 g/mm using the Feed texture analysing method #1 depending for instance on the feed ingredients used, but even than the shape of the curve from the Feed texture analysing method #2 will remain the same as shown in figures 1 and 2.

The results of texture analysis may be presented in a different format as shown in figure 3. Each pair of values "force (g)" and "strain (%)" at the first peak of force is given as "gradient" (=force/strain). "Gradient" is shown as a function of pellet size and plotted for each measured fish feed pellet. In case there is no first peak of force, see e.g. figure 1 for the soft and elastic fish feed, the pair of values are the endpoint of the graph, i.e. 40% compression has been reached without the pellet cracking.

### Example 1

A first 8.5 mm diameter fish feed according to the invention was produced as described in tables 2 and 3 and according to the recipe shown in table 1A. Actual content of main constituents is shown in table 1B. The 8.5 mm feed was compared to a standard, i.e. commercial, 9 mm diameter Atlantic salmon fish feed.

Texture of the feeds were analysed as described by Feed texture analysing methods #1 and #2. Results for the Feed texture analysing method #2 are shown in figure 1.

The shape of the salmon feed curve presented in figure 1 is typical for the standard hard and brittle extruded feed particles. The maximum force value, which represents hardness or the first cracking point of the feed particle, occurs rather early, i.e. short penetration distance of the probe, which results in a steep peek. After the first crack, the force does not get straightway to zero as the feed particle still shows some resistance while it is steadily broken down into smaller particles.

On the other hand, the soft and elastic fish feed particle according to the invention demonstrates a completely different shape of curve. This is typical for a soft and elastic sample. The long distance the probe compresses the feed particle without breaking it or reaching the first peak, indicates that the feed particle has not broken. This is an indication of elasticity of the pellet. Short distance of penetration before the first peak indicates a brittle feed particle whereas a long distance of penetration before rupture indicates a more elastic feed particle. In addition, the maximum breaking force of the elastic fish feed particle is significantly lower compared to the Atlantic salmon feed particle.

Hardness value of the first 8.5 mm elastic fish feed measured by Feed texture analysing method #1 was 516 g mm⁻¹. The hardness of the 9 mm Atlantic salmon feed, i.e. comparable size, was 3778 g mm⁻¹.

The elastic fish feed demonstrated standard quality criteria such as sinking speed, oil absorption capacity and durability according to commercial guidelines established by the Applicant (data not presented).

### Example 2

A 25 mm diameter fish feed according to the invention was produced as described in tables 2 and 3 and according to the recipe shown in table 1A. Actual content of main ingredients is shown in table 1B. The 25 mm diameter feed was compared to a standard, i.e. commercial, 22 mm diameter turbot fish feed.

Texture of the feeds were analysed as described by Feed texture analysing methods #1 and #2. Results for the Feed texture analysing method #2 are shown in figure 2.

The standard turbot feed shows no or very little resistance before the first crack, i.e. maximum force value, and therefore the force drops immediately to zero which results in a steep peak.

Hardness value of a 22 mm standard turbot feed was 3874 g mm⁻¹, while the hardness of the 25 mm tuna feed according to the invention was 416 g mm⁻¹.

The elastic fish feed demonstrated standard quality criteria such as sinking speed, oil absorption capacity and durability according to commercial guidelines established by the Applicant (data not presented).

Comparison of the curves of figures 1 and 2 shows that increasing the feed particle size from 8-9 mm to about 20 mm is not changing the texture of the feed particles according to the invention.

As shown in figure 3, pellets according to the invention in a "pellet size"-"gradient" diagram follows a linear distribution as a function of pellet size. The distribution may follow the formula: gradient = 33.5 x (pellet size) - 235. In contrast, hard pellets of known art may follow the formula: gradient = 202 x (pellet size) - 1364.

### Example 3

Five different feeds of 8.5 mm diameter according to the invention was produced as described in tables 2 and 3 and according to the recipes shown in table 4. The purpose was to evaluate shelf life of the feeds. Varying amounts of calcium propionate was added to the recipes as preservative. The feeds were stored at a temperature of 25°C and at 75% RH (relative humidity) during the whole storage period.

**Table 4 Formulations of fish feeds of Example 3**

| Ingredient (kg) | Samples | | | | |
|---|---|---|---|---|---|
| | 1 | 2 | 3 | 4 | 5 |
| Water (added) | 10.11 | 10.11 | 10.11 | 10.11 | 10.11 |
| Glycerol* | 3.02 | 3.02 | 3.02 | 3.02 | 3.02 |
| Potato starch | 6.31 | 6.31 | 6.31 | 6.31 | 6.31 |
| Wheat gluten hydrolysate | 8.50 | 8.50 | 8.50 | 8.50 | 8.50 |
| Vital wheat gluten | 4.96 | 4.96 | 4.96 | 4.96 | 4.96 |
| Krill meal | 0.90 | 0.90 | 0.90 | 0.90 | 0.90 |
| Fish meal | 47.08 | 46.98 | 46.88 | 46.73 | 46.73 |
| Fish protein hydrolysate | 4.51 | 4.51 | 4.51 | 4.51 | 4.31 |
| Fish oil | 10.35 | 10.35 | 10.35 | 10.35 | 10.35 |
| Minerals & vitamin mix | 4.27 | 4.27 | 4.27 | 4.27 | 4.27 |
| Calcium propionate | 0 | 0.15 | 0.25 | 0.35 | 0.55 |

Sampling was performed after 1 month, 3 months and 6 months of storage. Samples were analysed for microbial quality, i.e. mold, aerobic bacteria, anaerobic bacteria and *Clostridium perfringens,* and for hardness. Results for hardness are shown in figure 4.

In general, the microbiological results show that it is possible to store the product for six months without an anti-molding agent addition (results not shown). Moreover, the texture was acceptable for all the products produced in this trial after six months of storage.

Some hardening was observed between the one month samples and the three month samples. The hardness then remained stable between three and six months of storage. All samples remained soft and elastic during storage as all samples demonstrated a hardness of less than 1000 g mm⁻¹ after six months of storage.

### Example 4

A 35 mm diameter fish feed according to the invention was produced on a pilot scale as described in tables 2 and 3 and according to the recipe shown in table 1A. Actual content of main ingredients is shown in table 1B.

The measured hardness of the product was 443 g mm⁻¹. In addition, standard quality criteria for this type of feed were according to the Applicant's commercial guidelines (data not shown).

### Example 5

A 35 mm feed for tuna according to the invention was produced in the same way as described for the 8.5 mm tuna feed. For comparison and to check influence of scale of process, a second single-screw extruder (X-175, Wenger Manufacturing with a screw diameter of 175 mm) was used to produce 35 mm new tuna feed.

The 35 mm diameter fish feed was produced as described in tables 2 and 3 and according to the recipe shown in table 1A.

The feed was soft and elastic. In addition, standard quality criteria for this type of feed were according to the Applicant's commercial guidelines (data not shown).

### Example 6

Young bluefin tuna (*T. orientalis*) at approximately 6 kg body weight were caught by purse seine in 2017 and transferred to four sea cages in a commercial fish farm close to Wakayama (W. Japan). Each cage was stocked with approximately 850 fish that were fed raw forage fish mainly consisting of Japanese sardine (*Sardinops melanostictus*), Japanese horse mackerel (*Trachurus japonicas*), chub mackerel (*Scomber japonicas*) and/or blue mackerel (*S. australasicus*) to apparent satiation. The fish in two cages were weaned to eat a SOFT EP diet according to the present invention over a period of one month before onset of the growth trial. The growth trial compared SOFT EP with raw forage fish and started on December 11^{th} 2017. The trial lasted for 4 months till April 10^{th} 2018. The ambient water temperature decreased from 19°C at the start of the trial to 14-15°C in February-March before increasing again towards 17°C at the end of the trial. Fish were fed to apparent satiation and development in body size/growth was followed using an AQ1 camera system every month. Survival during the trial was high (> 99%) and independent of diet. Fish fed the SOFT EP grew significantly better (approximately 30% increase from initial body weight) compared to fish fed the raw forage fish (approximately 5% increase) (Figure 6). Especially during the period with declining water temperature and low water temperature, SOFT EP supported better growth than raw forage fish. Feed conversion ratio (FCR) calculated as feed dry matter (kg) used per kg weight gain of fish, were also better for SOFT EP (3.5 and 6.0) compared to feeding raw forage fish (5.3 and 11.2).

### Example 7

The following three diets were prepared by means of cooking extrusion into pellets of 20 mm diameter and assessed for elasticity and braking strength. Diet 1 contained both wheat gluten hydrolysate and glycerol, whereas diet 2 lacked wheat gluten hydrolysate and diet 3 lacked glycerol.

| **Diets** | Diet 1 | Diet 2 | Diet 3 |
|---|---|---|---|
| Water | 8.6 | 8.6 | 8.6 |
| Glycerol to extrusion | 3 | 3 | 0 |
| Potato starch | 7 | 7 | 7 |
| Wheat gluten hydrolysate | 7.5 | 0 | 7.5 |
| Vital wheat gluten | 7 | 7 | 7 |
| Krill meal | 0.9 | 0.9 | 0.9 |
| Fish meal | 42.8 | 50.3 | 45.8 |
| Fish Protein Hydrolysate | 5 | 5 | 5 |
| Fishoil | 14.7 | 14.7 | 14.7 |
| Min&Vit premix | 3.5 | 3.5 | 3.5 |

The pellets of diet 1 had a smooth surface and shiny appearance. The pellets were soft and elastic (Fig. 6A) and could easily be squeezed four to five times without rupturing (Fig. 6B).

In contrast, pellets of diet 2 and 3 had torn edges, rough cutting surface, marked protrusions and grooves (Fig. 7A and 8A, respectively). These pellets were not elastic. The pellets cracked/ruptured already after squeezing them once. After four to five times squeezing, they were ruptured considerably and started to fall apart (Fig. 7B and 8B, respectively).

Thus, both the plant protein hydrolysate and the plasticizer were required to obtain soft and elastic pellets as taught herein.

It should be noted that the above-mentioned embodiments illustrate rather than limit the invention, and that those skilled in the art will be able to design many alternative embodiments without departing from the scope of the appended claims. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. An extruded, formulated, complete feed for aquatic species, where said formulated, complete feed comprising:
- at least one non-hydrolysed protein source;
- at least one fat source;
- fibers;
- a vitamin additive;
- a mineral additive;
- water;
- a binder comprising at least partly an edible, starch containing, tuberous-originating thickening agent;
- a hydrolysed plant protein source; and
- a plasticizer,
and said formulated, complete feed comprises a moisture content from about 12.5% to about 25% (w/w) of the complete feed.

2. The feed according to claim 1, wherein said feed comprises from about 5% to about 9% (w/w) of an edible, starch containing, tuberous-originating thickening agent of the complete feed.

3. The feed according to any of the preceding claims, wherein said hydrolysed plant protein is a hydrolysed plant protein with a degree of hydrolysis from about 3% to about 25%.

4. The feed according to any of the preceding claims, wherein said feed comprises from about 5% to about 15% (w/w) hydrolysed plant protein of the complete feed.

5. The feed according to any of the preceding claims, wherein the hydrolysed plant protein comprises hydrolysed wheat gluten.

6. The feed according to any of the preceding claims, wherein said feed comprises from about 1.5% to about 5% (w/w) plasticizer of the complete feed.

7. The feed according to claim 6, wherein the plasticizer comprises glycerol.

8. The feed according to any of the preceding claims, wherein said feed comprises a moisture content from about 14% to about 20% (w/w) of the complete feed.

9. The feed according to any of the preceding claims, wherein said feed comprises a crude protein content from about 40% to about 60% (w/w) of the complete feed.

10. The feed according to any of the preceding claims, wherein said feed comprises a crude fat content from about 15% to about 35% (w/w) of the complete feed.

11. The feed according to any of the preceding claims, wherein said feed has a hardness less than 1000 g mm⁻¹ as measured by diametral compression using a texture-analyser fitted with a 50 kg load cell and a 5 mm diameter spherical cylinder, attain a trigger of 10 g, proceed to compress a horizontally placed feed pellet at a pre-test speed of 2 mm s⁻¹ and at a constant test speed of 2 mm s⁻¹ to achieve 35 g of force, set a post-test speed to 10 mm s⁻¹ and a break sensitivity to 10 g and record a strength-time graph by a computer.

12. The feed according to any of claims 1 to 10, wherein said feed has a hardness less than 1000 g mm⁻¹ as measured by diametral compression using a texture-analyser fitted with a 50 kg load cell and a 25 mm diameter spherical cylinder, attain a trigger of 5g, proceed to compress a horizontally placed feed pellet at a pre-test speed of 2 mm s⁻¹ and at a constant test speed of 2 mm s⁻¹ to achieve 40% compression, set a post-test speed to 10 mm s⁻¹, record a force-strain graph by a computer and calculate Gradient = Force (g) / Strain (%) at a first peak of the force.

13. A method of producing a feed for aquatic species according to any of the preceding claims, comprising the steps of:
i) providing the:
- at least one non-hydrolysed protein source;
- at least one fat source;
- fibers;
- a vitamin additive;
- a mineral additive;
- water;
- a binder comprising at least partly an edible, starch containing, tuberous-originating thickening agent;
- a hydrolysed plant protein source; and
- a plasticizer;
ii) mixing at least the at least one non-hydrolysed protein source, fibers, vitamin additive, mineral additive, binder comprising at least partly an edible, starch containing, tuberous-originating thickening agent, hydrolysed plant protein source, and optionally, the at least one fat source, plasticizer, and water;
iii) optionally, feeding the mixture of step ii) into a pre-conditioner;
iv) optionally, adding the plasticizer and/or the at least one fat source to the pre-conditioner;
v) optionally, adding steam and/or water to the pre-conditioner;
vi) feeding the, optionally preconditioned, mixture to a cooking extruder;
vii) optionally, adding the plasticizer and/or the at least one fat source to the cooking extruder;
viii) optionally, adding water and/or steam to the mixture of step vii);
ix) making an extrudate, and optionally cutting the extrudate into feed pellets; and
x) optionally, adding the at least one fat source to the feed pellets by sub-atmospheric coating.

14. The method according to claim 13, wherein the extrudate in step ix) is made with an oil absorbing capacity of at least 10% (w/w).

15. The method of feeding an aquatic species, said method comprising the step of administering to said aquatic species a feed according to any of claims 1-12.

16. The method according to claim 15, wherein the aquatic species is selected from the group consisting of tuna, salmonids, basses, tilapia, cleaner fish, cod fish, flat fish such as flounders, soles, turbot, plaice, and halibut, catfish, pike and pickerel, carps, breams such as sea bream, shrimp, prawns, crabs, lobsters, and crawfish.

## Patentansprüche

1. Extrudiertes, formuliertes Alleinfuttermittel für aquatische Arten, wobei das formulierte Alleinfuttermittel Folgendes umfasst:
- mindestens eine nicht-hydrolysierte Proteinquelle;
- mindestens eine Fettquelle;
- Fasern;
- einen Vitamin-Zusatzstoff;
- einen mineralischen Zusatzstoff;
- Wasser;
- ein Bindemittel, das zumindest teilweise ein essbares, stärkehaltiges, aus Knollen stammendes Verdickungsmittel umfasst;
- eine hydrolysierte Pflanzenproteinquelle; und
- einen Weichmacher,
und wobei das formulierte Alleinfuttermittel einen Feuchtigkeitsgehalt von etwa 12,5% bis etwa 25 Gew.-% des Alleinfuttermittels umfasst.

2. Futtermittel nach Anspruch 1, wobei das Futtermittel von etwa 5% bis etwa 9 Gew.-% eines essbaren, stärkehaltigen, aus Knollen stammenden Verdickungsmittels des Alleinfuttermittels umfasst.

3. Futtermittel nach einem der vorstehenden Ansprüche, wobei das hydrolysierte Pflanzenprotein ein hydrolysiertes Pflanzenprotein mit einem Hydrolysegrad von etwa 3% bis etwa 25% ist.

4. Futtermittel nach einem der vorstehenden Ansprüche, wobei das Futtermittel etwa 5% bis etwa 15 Gew.-% hydrolysiertes Pflanzenprotein des Alleinfuttermittels umfasst.

5. Futtermittel nach einem der vorstehenden Ansprüche, wobei das hydrolysierte Pflanzenprotein hydrolysiertes Weizengluten umfasst.

6. Futtermittel nach einem der vorstehenden Ansprüche, wobei das Futtermittel etwa 1,5% bis etwa 5 Gew.-% Weichmacher des Alleinfuttermittels umfasst.

7. Futtermittel nach Anspruch 6, wobei der Weichmacher Glycerin umfasst.

8. Futtermittel nach einem der vorstehenden Ansprüche, wobei das Futtermittel einen Feuchtigkeitsgehalt von etwa 14% bis etwa 20 Gew.-% des Alleinfuttermittels umfasst.

9. Futtermittel nach einem der vorstehenden Ansprüche, wobei das Futtermittel einen Rohproteingehalt von etwa 40% bis etwa 60 Gew.-% des Alleinfuttermittels umfasst.

10. Futtermittel nach einem der vorstehenden Ansprüche, wobei das Futtermittel einen Rohfettgehalt von etwa 15% bis etwa 35 Gew.-% des Alleinfuttermittels umfasst.

11. Futtermittel nach einem der vorstehenden Ansprüche, wobei das Futtermittel eine Härte von weniger als 1000 g mm⁻¹ aufweist, gemessen durch diametrale Kompression unter Verwendung eines Texturanalysators, der mit einer 50 kg Kraftmessdose und einem Kugelzylinder von 5 mm Durchmesser ausgestattet ist, Erreichen eines Auslösers von 10 g, Fortfahren der Kompression eines horizontal platzierten Futtermittelpellets mit einer Vorprüfgeschwindigkeit von 2 mm s⁻¹ und einer konstanten Prüfgeschwindigkeit von 2 mm s⁻¹, um eine Kraft von 35 g zu erreichen, Einstellen einer Nachprüfgeschwindigkeit von 10 mm s⁻¹ und einer Bruchempfindlichkeit von 10 g und Aufzeichnen eines Kraft-ZeitDiagramms mit einem Computer.

12. Futtermittel nach einem der Ansprüche 1 bis 10, wobei das Futtermittel eine Härte von weniger als 1000 g mm⁻¹ aufweist, gemessen durch diametrale Kompression unter Verwendung eines Texturanalysators, der mit einer 50 kg Kraftmessdose und einem Kugelzylinder von 25 mm Durchmesser ausgestattet ist, Erreichen eines Auslösers von 5 g, Fortfahren der Kompression eines horizontal platzierten Futtermittelpellets mit einer Vorprüfgeschwindigkeit von 2 mm s⁻¹ und einer konstanten Prüfgeschwindigkeit von 2 mm s⁻¹ , um eine Kompression von 40% zu erreichen, Einstellen einer Nachprüfgeschwindigkeit von 10 mm s⁻¹, Aufzeichnen eines Kraft-Dehnungs-Diagramms mit einem Computer und Berechnen des Gradienten = Kraft (g) / Dehnung (%) bei einem ersten Spitzenwert der Kraft.

13. Verfahren zur Herstellung eines Futtermittels für aquatische Arten nach einem der vorstehenden Ansprüche, umfassend die Schritte:
i) Bereitstellen:
- mindestens einer nicht-hydrolysierten Proteinquelle;
- mindestens einer Fettquelle;
- Fasern;
- eines Vitamin-Zusatzstoffs;
- eines mineralischen Zusatzstoffs;
- Wasser;
- eines Bindemittels, das zumindest teilweise ein essbares, stärkehaltiges, aus Knollen stammendes Verdickungsmittel umfasst;
- einer hydrolysierten Pflanzenproteinquelle; und
- einen Weichmacher;
ii) Mischen mindestens der mindestens einen nicht hydrolysierten Proteinquelle, der Fasern, des Vitamin-Zusatzstoffs, des mineralischen Zusatzstoffs, des Bindemittels, das mindestens teilweise ein essbares, stärkehaltiges, aus Knollen stammendes Verdickungsmittel umfasst, der hydrolysierten Pflanzenproteinquelle und optional der mindestens einen Fettquelle, des Weichmachers und des Wassers;
iii) optional Einleiten der Mischung aus Schritt ii) in einen Vorkonditionierer;
iv) optional Zugabe des Weichmachers und/oder der mindestens einen Fettquelle zu dem Vorkonditionierer;
v) optional Zugabe von Dampf und/oder Wasser in den Vorkonditionierer;
vi) Einleiten der optional vorkonditionierten Mischung in einen Kochextruder;
vii) optional Zugabe des Weichmachers und/oder der mindestens einen Fettquelle in den Kochextruder;
viii) optional Zugabe von Wasser und/oder Dampf zu der Mischung aus Schritt vii);
ix) Herstellung eines Extrudats und optional Schneiden des Extrudats in Futterpellets; und
x) optional Zugabe der mindestens einen Fettquelle zu den Futterpellets durch subatmosphärische Beschichtung.

14. Verfahren nach Anspruch 13, wobei das Extrudat in Schritt ix) mit einer Ölabsorptionskapazität von mindestens 10 Gew.-% hergestellt wird.

15. Verfahren zur Fütterung einer aquatischen Spezies, wobei das Verfahren den Schritt der Verabreichung eines Futtermittels nach einem der Ansprüche 1-12 an die aquatische Spezies umfasst.

16. Verfahren nach Anspruch 15, wobei die aquatische Spezies aus der Gruppe ausgewählt ist, die aus Thunfisch, Salmoniden, Barschen, Tilapia, Putzerfischen, Kabeljau, Plattfischen wie Flundern, Seezungen, Steinbutt, Schollen und Heilbutt, Welsen, Hechten und Zandern, Karpfen, Brassen wie Seebrassen, Garnelen, Krabben, Hummern und Langusten besteht.

## Revendications

1. Aliment complet, formulé, extrudé pour des espèces aquatiques, ledit aliment complet formulé comprenant :
- au moins une source de protéines non hydrolysées ;
- au moins une source de graisses ;
- des fibres ;
- un additif vitaminé ;
- un additif minéral ;
- de l'eau ;
- un liant comprenant au moins en partie un agent épaississant comestible, contenant de l'amidon et d'origine tubéreuse ;
- une source de protéines végétales hydrolysées ; et
- un plastifiant,
et ledit aliment complet formulé comprend une teneur en humidité d'environ 12,5 % à environ 25 % (en poids) de l'aliment complet.

2. Aliment selon la revendication 1, dans lequel ledit aliment comprend d'environ 5 % à environ 9 % (en poids) d'un agent épaississant comestible, contenant de l'amidon et d'origine tubéreuse, de l'aliment complet.

3. Aliment selon l'une quelconque des revendications précédentes, dans lequel lesdites protéines végétales hydrolysées sont des protéines végétales hydrolysées avec un degré d'hydrolyse d'environ 3 % à environ 25 %.

4. Aliment selon l'une quelconque des revendications précédentes, dans lequel ledit aliment comprend d'environ 5 % à environ 15 % (en poids) de protéines végétales hydrolysées de l'aliment complet.

5. Aliment selon l'une quelconque des revendications précédentes, dans lequel les protéines végétales hydrolysées comprennent du gluten de blé hydrolysé.

6. Aliment selon l'une quelconque des revendications précédentes, dans lequel ledit aliment comprend d'environ 1,5 % à environ 5 % (en poids) de plastifiant de l'aliment complet.

7. Aliment selon la revendication 6, dans lequel le plastifiant comprend du glycérol.

8. Aliment selon l'une quelconque des revendications précédentes, dans lequel ledit aliment comprend une teneur en humidité d'environ 14 % à environ 20 % (en poids) de l'aliment complet.

9. Aliment selon l'une quelconque des revendications précédentes, dans lequel ledit aliment comprend une teneur en protéines brutes d'environ 40 % à environ 60 % (en poids) de l'aliment complet.

10. Aliment selon l'une quelconque des revendications précédentes, dans lequel ledit aliment comprend une teneur en matières grasses brutes d'environ 15 % à environ 35 % (en poids) de l'aliment complet.

11. Aliment selon l'une quelconque des revendications précédentes, dans lequel ledit aliment présente une dureté inférieure à 1 000 g mm⁻¹ telle que mesurée par compression diamétrale en utilisant un analyseur de texture muni d'une cellule de charge de 50 kg et d'un cylindre sphérique de 5 mm de diamètre, en atteignant un déclencheur de 10 g, procédant à la compression d'un granulé alimentaire placé horizontalement à une vitesse de pré-test de 2 mm s⁻¹ et à une vitesse de test constante de 2 mm s⁻¹ pour obtenir 35 g de force, régler une vitesse post-test à 10 mm s⁻¹ et une sensibilité à la rupture à 10 g et enregistrer un graphique résistance-temps par un ordinateur.

12. Aliment selon l'une quelconque des revendications 1 à 10, dans lequel ledit aliment présente une dureté inférieure à 1 000 g mm⁻¹ telle que mesurée par compression diamétrale en utilisant un analyseur de texture muni d'une cellule de charge de 50 kg et d'un cylindre sphérique de 25 mm de diamètre, en atteignant un déclencheur de 5 g, procédant à la compression d'un granulé alimentaire placé horizontalement à une vitesse de pré-test de 2 mm s⁻¹ et à une vitesse de test constante de 2 mm s⁻¹ pour obtenir 40 % de compression, régler une vitesse post-test à 10 mm s⁻¹, enregistrer un graphique force-déformation par un ordinateur et calculer le gradient = force (g) / déformation (%) à un premier pic de la force.

13. Procédé destiné à produire un aliment pour des espèces aquatiques selon l'une quelconque des revendications précédentes, comprenant les étapes suivantes :
i) fournir :
- au moins une source de protéines non hydrolysées ;
- au moins une source de graisses ;
- des fibres ;
- un additif vitaminé ;
- un additif minéral ;
- de l'eau ;
- un liant comprenant au moins en partie un agent épaississant comestible, contenant de l'amidon et d'origine tubéreuse ;
- une source de protéines végétales hydrolysées ; et
- un plastifiant ;
ii) mélanger au moins l'au moins une source de protéines non hydrolysées, des fibres, un additif vitaminé, un additif minéral, un liant comprenant au moins en partie un agent épaississant comestible, contenant de l'amidon et d'origine tubéreuse, une source de protéines végétales hydrolysées, et en option l'au moins une source de graisses, plastifiant, et de l'eau ;
iii) en option, alimenter le mélange de l'étape ii) dans un préconditionneur ;
iv) en option, ajouter le plastifiant et/ou l'au moins une source de graisses au préconditionneur ;
v) en option, ajouter de la vapeur et/ou de l'eau au préconditionneur ;
vi) alimenter le mélange, en option préconditionné, dans une extrudeuse de cuisson ;
vii) en option, ajouter le plastifiant et/ou l'au moins une source de graisses dans l'extrudeuse de cuisson ;
viii) en option, ajouter de l'eau et/ou de la vapeur au mélange de l'étape vii) ;
ix) produire un extrudat, et en option découper l'extrudat en granulés alimentaires ; et
x) en option, ajouter l'au moins une source de graisses aux granulés alimentaires par revêtement sub-atmosphérique.

14. Procédé selon la revendication 13, dans lequel l'extrudat dans l'étape ix) est produit avec une capacité d'absorption d'huile d'au moins 10 % (en poids).

15. Procédé d'alimentation d'espèces aquatiques, ledit procédé comprenant l'étape destinée à administrer auxdites espèces aquatiques un aliment selon l'une quelconque des revendications 1 à 12.

16. Procédé selon la revendication 15, dans lequel les espèces aquatiques sont choisies dans le groupe consistant en thons, salmonidés, bars, tilapias, poissons nettoyeurs, morues, poissons plats tels que flets, soles, turbot, plies et flétans, poissons-chats, brochets et dorés jaunes, carpes, brèmes telles que dorades royales, crevettes, crevettes roses, crabes, homards et écrevisses.
